# EUROPEAN PATENT APPLICATION

(11) **EP 3 567 372 A1**
(43) Date of publication of application: **13.11.2019**
(21) Application number: 19173480.5
(22) Date of filing: 09.05.2019
(51) Int. Cl.: G01N 35/04

(54) **HANDLING SYSTEM FOR A TUBE CARRIER**

(30) Priority: 09.05.2018 LU 100791
(71) Applicant: Stratec SE, 75217 Birkenfeld (DE)
(72) Inventor: Trump, Martin, 75180 Pforzheim (DE); Gröhbühl, Bernd, 76275 Ettlingen (DE)
(74) Representative: Tegethoff, Sebastian

(57) **Abstract**

The invention relates to a handling system for actuating single sample tube carrier and a method for actuating such carriers. The instant invention provides a handling system for actuating at least one single sample tube carrier, comprising a carrier plate for placing the at least one single sample tube carrier onto it; and at least one movable magnet below the carrier plate for coupling the at least one single sample tube carrier; and a drive for moving the at least one movable magnet in a z-axis towards or from the lower side of the carrier plate for coupling of the at least one single sample carrier; and in x and y axis together with a coupled at least one single sample carrier for moving the at least one single sample carrier onto the carrier plate; and subunits for loading, unloading, parking or storing the at least one single sample tube carrier

## Description

### Field of the invention

The field of the present invention relates to a handling system for an automated analyzer system where patient samples have to be inserted.

### Brief description of the related art

Rack based loading systems for samples are used in automated analyzers like instruments of STRATEC® Biomedical AG. The samples are stored in tubes which are vertically inserted into a rack in a way that an ID codes of the tubes can be read-out. The racks vary regarding the number of sample tubes they can carry, in their geometry and size, the type of tube fixation within the rack as well as in rack ID labeling and empty position detection.

The user manually inserts sample racks into a sample loading bay of an automated analyzer, wherein the sample rack can be scanned during insertion of the rack. Once inserted and identified, the samples usually remain immobile at their position in the sample rack until they are processed and taken out by a user. The pipettor moves to reach a specific samples.

An alternative approach to samples that are placed in a sample rack and a moving pipette represents a systems that transports sample tubes to a processing place. Such a transport can be achieved by sample tubes that are placed in a rotating disc providing specific places for taking up samples.

European Patent Application EP 2 977 765 A1 discloses a sample container carrier for a laboratory sample distribution system having a cover above a magnet in order to suitably align and move the sample container in the magnetic field lines. The document further relates to a laboratory sample distribution system having such a sample container carrier and to a laboratory automation system containing such a laboratory sample distribution system.

International application WO 2013/099647 A1 discloses a test tube holder, which can substantially perpendicularly hold various kinds of test tubes and has a structure durable with respect to loading/unloading of the test tubes, is applicable to various test tube shapes, and has excellent assemblability. A test tube holder according to this document is provided with: a housing section having a hollow portion therein; a holding section, which is positioned on the upper side of the housing section, and which has an opening for receiving test tubes, and a housing section for housing the received test tubes; and an elastic section, which is formed on the inner side of the holding section such that the elastic section is in contact with the housed test tubes. The test tube holder is characterized in having a weight that is housed in the hollow portion. The holding section and the elastic section may be integrally formed, preferably the sections are integrally formed of resin. In the hollow portion of the housing section, an individual identification tag, an electromagnetic wave absorber, and a supporting member for a tapered test tube can be housed in addition to the weight, depending on the intended use.

Document WO 2012/158520 A1 concerns a laboratory product transport element for a laboratory transport system with an energy receiver and/or energy accumulator to provide drive power, at least one signal receiver to receive control signals, a control unit to generate drive signals as a function of at least one control signal obtained from the at least one signal receiver, movement devices for independent movement of the laboratory product transport element on a transfer path as a function of the drive signals of the control unit, in which the drive devices are driven by the drive power and at least one holder to hold a laboratory product being transported. The invention also concerns a laboratory transport system with at least one laboratory product transport element according to an embodiment of the invention and a transfer path arrangement. The invention also concerns methods for operation of laboratory transport systems according to an embodiment of the invention.

Published International application WO 2011/138448 A1 relates to a system for transporting containers between different stations, wherein the containers are accommodated in container carriers. The system comprises a control unit, which controls the transportation of the container carriers, a transporting surface, which is subdivided into sub-surfaces and on which the container carriers can be arranged in a movable manner, and drive means, wherein the drive means are activated by the control unit and one drive means in each case is assigned to one subsurface in each case, wherein a drive means in each case is designed in order to provide an associated container carrier with driving power.

Published patent application EP 3 330 717 A1, EP 2 995 960 A1 and WO 2018/024885 A1 disclose handling systems for automatic analyzer which are based on electro-magnets that are arranged in a grid below a carrier plate and can be magnetized subsequently in order to move a carrier. Such systems have the disadvantage of requiring a certain number of electro-magnets. Furthermore, movements of a carrier are dependent from the pattern of arrangement of the magnets.

In published Japanese applications JP 85 154204 U and JP 61 69604 A are magnets disclosed that are fixed to a belt or chain so that a carrier can only be moved along or in the direction of a moving belt or chain.

The handling of specific transport carrier seems to be crucial to avoid unsatisfying STAT (Short Turn Around Time) sample management which is a side effect of rack-based handling systems, as at least one complete rack loading lane needs to be kept free all the time in case a single STAT sample must be loaded.

Another disadvantage of rack-based handling systems is that a sample loading module occupies a lot of valuable space at the instrument front, whereas space in the rear of the instrument remains unused as it cannot be accessed by the user for loading and unloading samples.

The complete Sample Loading Unit needs to be accessible by the pipettor, which typically leads disadvantageously to larger pipettor travel ways, higher cost and spatial constraints.

The usual Sample Loading Unit is typically an area used by both, pipettor and user, which drives the needs for thorough risk assessment and appropriate risk mitigations to avoid hazardous interaction or unintended instrument damages.

Calibrators and control samples need a free sample rack so that an unoccupied rack lane has be introduced.

User handling of the sample racks has some ergonomic deficiencies like cumbersome loading or introducing of a long rack onto the guiding rails of the module or lack of stability of a rack when standing on a lab desk.

Sample vessels need to be manually oriented in the racks with their ID codes facing towards specific rack openings for safe and reliable reading.

Cleaning of the module base is complicated due to installed rack guiding features.

### Object of the invention

The present invention shall provide a handling system for a passive transport carrier for a single sample tube.

### Summary of the invention

The instant invention provides a handling system for actuating at least one single sample carrier, comprising
a. a carrier plate for placing the at least one single sample carrier onto it; and
b. at least one movable U-shaped magnet arranged below the carrier plate for coupling the at least one single sample carrier with a ferromagnetic core; and
c. a drive for moving the at least one movable U-shaped magnet
   i. in a z-axis towards or from the lower side of the carrier plate for coupling of the at least one single sample carrier; and
   ii. in x and y axis together with a coupled at least one single sample carrier for moving the at least one single sample carrier onto the carrier plate; and
d. subunits for loading, unloading, parking or storing the at least one single sample carrier

In a further aspect, the handling system may comprise a U-shaped magnet that is arranged with its opening towards the carrier plate.

The handling system may further comprise a tray for arranging at least two single sample carriers onto it.

In a further embodiment, a barcode scanner or camera system can be a part of a handling system to identify the at least one single sample carrier and/or a sample tube placed into such a carrier comprising a drive for moving the movable magnet towards or from the carrier plate for coupling of a carrier in a z-axis and further in x and y axis with a coupled carrier for moving the carrier within the automated analyzer system.

It is envisaged to provide in an embodiment a sensor, e.g. a Hall-sensor, for detecting coupling of the at least one single sample carrier by detecting changes of magnetic fields.

In another aspect, the handling system may comprise a a centering member for the at least one single sample carrier and/or the sample tube placed into such a carrier, wherein a first centering member is adapted to enclose a sample carrier leaving one side open so that the sample carrier can move inside the first centering member and/ or a second centering member 35 adapted to encloses the upper part of the sample tube for its fixation.

Another object of the invention is a method for actuating at least one single sample carrier for a single sample tube in an automated analyzer system, comprising the steps of:
a. Providing the at least one single sample carrier comprising an internal magnet onto a carrier plate;
b. Providing a handling system with at least one movable U-shaped magnet below the carrier plate;
c. Providing a drive for moving the at least one movable U-shaped magnet below the carrier plate in x, y and z-axis;
d. Coupling the at least one movable U-shaped magnet below the carrier plate to the ferromagnetic core (which may also have a U-shape) of the at least one single sample tube carrier by moving said at least one movable U-shaped magnet below the carrier plate in z-axis in the direction towards the lower side of the carrier plate; and
e. Actuating the sample carrier by moving the at least one movable U-shaped magnet below the carrier plate in x- and/or y-axis together with the coupled at least one single sample carrier.

The method may comprise in a further aspect that the at least one single sample carrier is scanned or optically captured prior to providing it.

Arranging the at least one sample carrier onto the carrier plate or in subunits for loading, unloading, parking or storing may represent a step in a further embodiment.

The step of detecting the coupling of the at least one single sample carrier using a sensor for detecting changes in magnetic fields is further envisaged.

It is intended that the method of the invention may comprise the step of centering of the at least one sample tube carrier and/or sample tube in intended positions for processing the sample using centering member by a first centering member for enclosing the at least one sample carrier and/or a second centering member for fixation of the upper part of the sample tube in intended positions for processing the sample.

In a further aspect, the method of the invention may comprise the step of aspirating the sample from the sample tube after reaching a processing position.

Still other aspects, features, and advantages of the present invention are readily apparent from the following detailed description, simply by illustrating a preferable embodiments and implementations. The present invention is also capable of other and different embodiments and its several details can be modified in various obvious respects, all without departing from the spirit and scope of the present invention. Accordingly, the drawings and descriptions are to be regarded as illustrative in nature, and not as restrictive. Additional objects and advantages of the invention will be set forth in part in the description which follows and in part will be obvious from the description, or may be learned by practice of the invention

### Summary of the figures

For a more complete understanding of the present invention and the advantages thereof, reference is now made to the following description and the accompanying drawings, it shows:
- FIG. 1: Tray for six single sample tube carriers
- FIG. 2: Tray with four lanes
- FIG. 3: Arrangement of single sample tube carriers
- FIG. 4: Movement of a single sample tube carrier
- FIG. 5: Arrangement of uncoupled and coupled handling system
- FIG. 6: Alignment of single sample tube carrier for scanning
- FIG. 7: 3D arrangement of single sample tube carriers
- FIG. 8: Centering member for sample tube and its carrier

### Detailed description of the invention

The invention relates to a handling system for a passive transport carrier for a single sample tube. The technical problem is solved by the features of the independent claim. The dependent claims refer to further embodiments of the invention.

According to the present invention, passive in terms of a carrier means, that the carrier has no active drive components to accomplish the transport by itself. The carrier is a generic device to allow for integration in various OEM analyzers and their loading and transport concepts. It has an internal ferromagnetic core, so it can be moved by magnetic force of an external permanent magnet as part of the transport installation.

The terms carrier, sample carrier, transport carrier and passive transport carrier shall be understood as synonyms within the description of the present invention.

A subunit within the meaning of the present invention shall be a defined area onto the carrier plate for given functional purposes like loading, unloading, parking and storing. A subunit may also define an area onto the carrier plate for providing or taking a single sample tube carrier onto or from the carrier plate.

A carrier within the meaning of the present invention is equipped with two big wheels that support a low friction linear movement and allow for rotating the carrier around its vertical centre axis. The carrier further comprises RFID technology to carry and provide information about the carrier ID and type, the loaded tube and sample and additional information like e.g. priorities for handling, travel paths or destination. The carrier information and information about the patient sample may also be matched by the instrument software. This could be useful if the RFID Tag is not writable within the instrument.

The handling system consists of subunits for loading and unloading carrier on an automated analyzer system, moving and parking carrier inside the analyzer, identifying carrier and samples placed in a carrier, positioning carrier for pipettor access, and unloading carrier after processing of the carried sample.

The handling system is integrated and assists to use a carrier within the meaning of the present invention in any specific automated analyzer design. The following detailed description of the handling system is done by segmentation of the handling system in subunits.

A user has to transport a carrier from the lab work bench to the analyzer and back. This transport cannot reasonably be done by carrying each carrier alone in a mid-throughput system. In the morning for example, when a new work shift begins, many dozens of samples have to be transferred and loaded quickly into the automated analyzer prior to running an analyzer. Thus, a tray or transport tray is required for a single tube carrier to which the present invention refers.

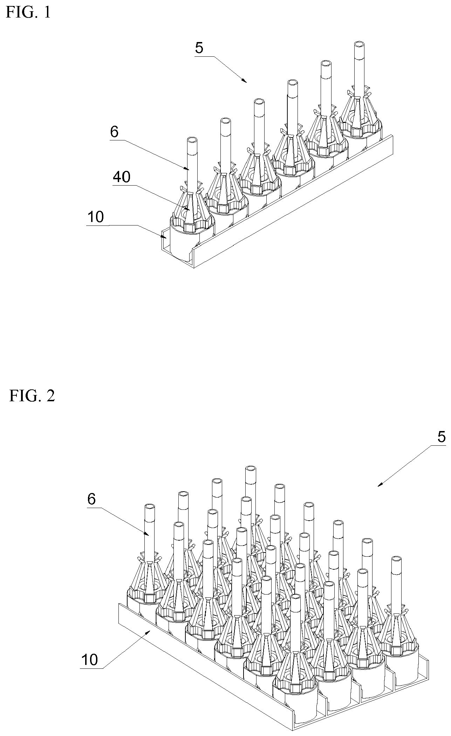

The handling system supports transfer for loading and unloading of multiple carrier at a time with trays as shown in FIG. 1 and FIG. 2. A tray collects, arranges and carries various numbers of carrier. Depending on the tray capacity and loading/unloading/sorting strategies, one or multiple trays can be dock-connected to specific ports at the automated analyzer system. Once connected, a tray can be left within or attached to the system which will perform loading and unloading without a user interaction being further necessary.

FIG. 1 shows a tray 10 for six carriers 5 with each one carrying a sample tube 6 being positioned onto it and fixed by clamps 40. FIG. 2 shows a tray 10 with four lanes with each lane being adapted to take up to six carriers 5 with each one carrying a sample tube 6.

However, loading and identification of samples and carrier has to be done as fast as possible to give immediate feedback about the samples on a carrier for obtaining their identification status and, if necessary, to allow for fast continuation of loading further samples.

Size and capacity of trays and arrangement of carrier on trays depend on the automated analyzer's throughput needs and architecture. Linear, two dimensional and rotational pattern designs are envisaged.

Moving carrier may be necessary to change their position on trays or in the analyzer. A typical handling sequence for a tray of a handling system according to the invention can be simplified summarized as follows without being limited to this sequence:
Loading Tray → Parking → Identification → Parking → Pipettor
→ Parking → Unloading Tray

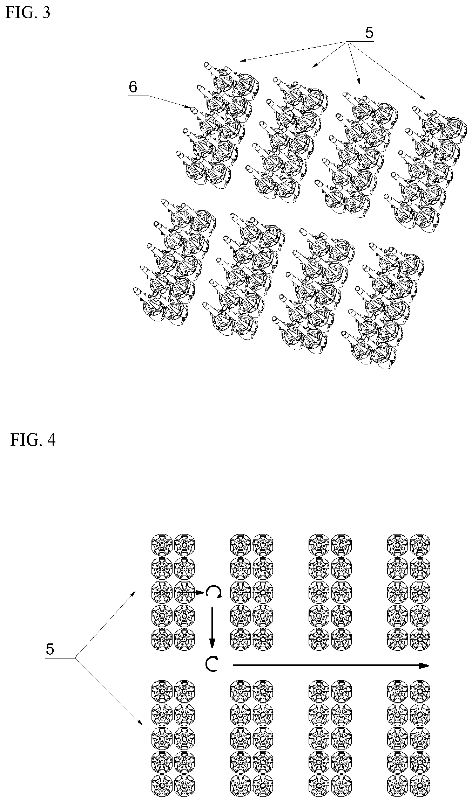

FIG. 3 and FIG. 4 visualize the arrangement and movements that carrier 5 with sample tube 6 may perform (indicated by the arrows) within the scope of this invention. Some of these moves can be simply linear to bridge distances between two positions or subunits. Some moves for parking a carrier, depend on the parking and storage infrastructure of the automated analyzer, but may be better supported by two dimensional moves and additional turns, comparable to what a car has to do for getting into a parking lot.

FIG. 3 shows an 8x10 carrier arrangement in a parking or storing location within an automated analyzer system allowing accessibility to each carrier.

For identification purposes of a sample tube in a carrier it is in some cases intended to rotate the carrier around its center vertical axis.

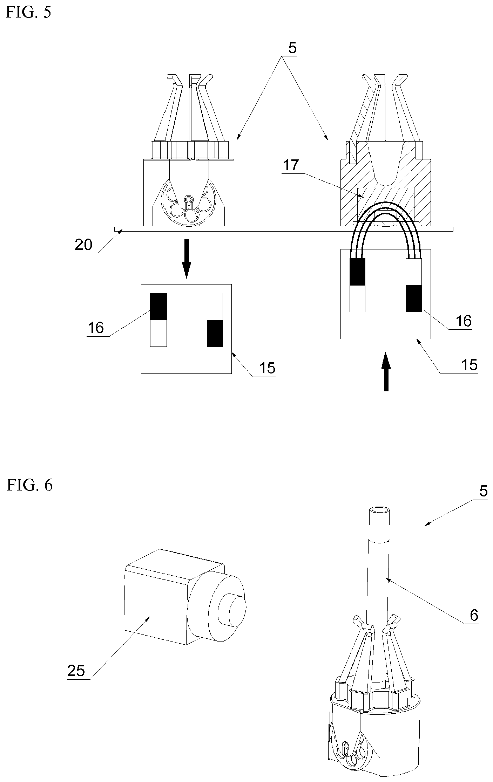

FIG. 5 shows that the handling system 15 is arranged below a carrier plate 20. The carriers 5 are placed, parked or stored onto carrier plate 20. The handling system 15 approaches a carrier 5 for its movement from the lower side of carrier plate 20 (indicated by the arrows), wherein the handling system 15 comprises an internal permanent U-shaped magnet 16 and the carrier comprises a U-shaped magnetic core. In a defined proximity the magnetic forces allow for moving the carrier due to the magnetic force and allows even to rotate a carrier. The use of a U-shaped magnet in the handling system and a ferromagnetic core that may also have a U-shape in the passive carrier has been shown to be advantageous regarding the coupling and handling properties of the carrier. In particular an orientation of the openings of the U-shaped magnet and a U-shaped ferromagnetic core towards each other have been shown to be advantageous. Nevertheless, the handling system of the present application is also working with ferromagnetic cores having another shape than a U-shape.

It is to be noted that the handling system of the present invention is not based on electro-magnets that are arranged below the carrier plate in a defined pattern or grid and which can be magnetized by an electric current so that a sample carrier is moved by magnetizing subsequently neighboring electro-magnets. The present invention is based on movable magnets within the meaning that the magnets are moved below the carrier plate.

The left part of FIG. 5 shows an uncoupled handling system 15, wherein the handling system 15 in coupled to a carrier 5 in the right part of FIG. 5. The arrows indicate the direction of movement of handling system 15.

Once patient samples in a sample tube 6 are loaded, the analyzer needs to identify them and schedule the relevant test or tests for each sample. FIG. 6 shows that each carrier 5 with a patient sample tube 6 is moved in position (indicated by arrow) at an identification subunit or position, that mainly comprises a barcode scanner or a camera system 25. Such a system can be configured to identify more than just the labeled sample ID, e.g. tube sizes, types, fill levels etc., because an RFID reader can be further installed for simultaneously identifying the carrier ID.

As shown in FIG. 6, the carrier 5 can be rotated (arrow) in front of a sample ID camera system 25 to successfully read the ID label, independent of any alignment of the sample tube within the carrier. Alternatively, a multi-mirror system may project all sides of the sample tube towards the scanner or camera field of view.

Unused carriers will have to be parked or stored inside an automated analyzer system for awaiting further actions including identification, pipetting, waiting for valid test results, retesting (again pipetting) depending on previous results or any difficulties or errors on initial testing. Parking or storage will be done such that individual access to any carrier is possible.

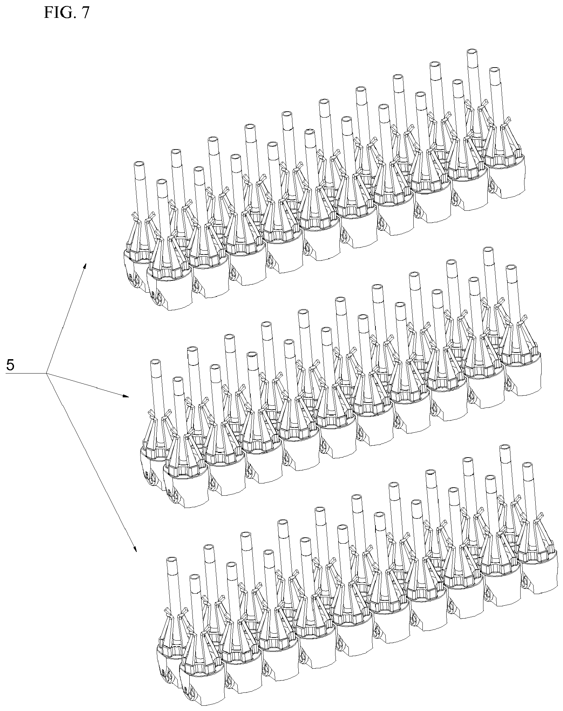

Various arrangements (linear, 2D, 3D) of carrier 5 can be realized. A two-dimensional example is shown in FIG. 3 and a three-dimensional approach in multiple layers is illustrated in FIG. 7. Such an arrangement requires an additional vertical transport mechanism (not shown).

Accurate identification and positioning of a sample tube for pipettor access is very important. Positioning challenges increase with smaller sample tube diameters and growing aspiration probe or disposable tip sizes.

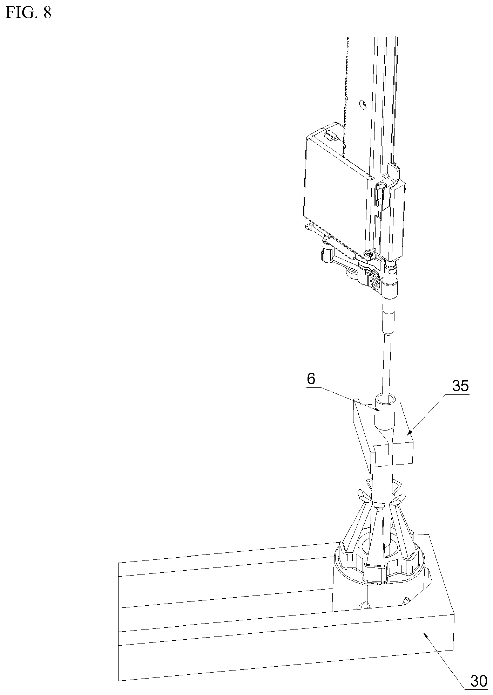

FIG. 8 shows two centering members 30, 35, which can substitute or complement each other. Centering member 30 enclosed a sample carrier leaving one. Side open so that the sample carrier can move inside centering member 30. Centering member 35 encloses the upper part of the sample tube 6 for its fixation. The positioning is not only relying on positional accuracy of the transport move but intends to add centering member 30 for the carrier and/or centering member 35 for the sample tube 6 in the carrier if necessary.

Prior to aspiration, an RFID reader below the carrier - pipetting position, but above the carrier plate may verify the correct carrier-sample combination.

The advantages of a handling system according to the invention can be summarized as follows:
- A system for loading, identification, automated handling and unloading of patient samples that easily adapts to various demands of different analyzer systems like throughput (number of carriers inside and outside the analyzer), system architecture and layout (where functionalities can and need to be located in the analyzer) and user interface requirements (size, type, areas).
- A system to easily allow for separation of user interaction (loading zone) and analyzer interaction (sample zone) with a patient sample and so to improve user interface safety in accordance to the latest demands of IVD Directive 98/79/EC.
- A system that supports flexible loading, processing and unloading of single or only few samples. If only one or a few samples need to be loaded, they do not block a complete rack lane and it is not necessary to wait until the last sample on a rack is processed before all can be unloaded. A significant example is that a single STAT (Short Turn Around Time) sample can be loaded at any time. Identically this applies to calibrator and control samples, which maintain and demonstrate the analyzer's test result accuracy.
- Samples can be assorted along the loading and unloading process according to specific parameters (e.g. unloading is assorted depending on positive or negative test results or depending on whether a re-test is necessary or not).
- The Sample Loading Module does not force to occupy a lot of valuable space at the instrument front. Specific module functionalities like sample identification and storage can be located to areas in the analyzer where the system layout offers open space.
- The pipettor does not need to access and travel to all loaded stationary samples. Pipettor travel ways can be reduced, as well as pipettor cost, spatial constraints and potential timing issues. However, part of that functionality and cost is now transferred to the introduced system.
- Sample vessels do no longer need to be manually oriented with their ID codes facing towards a scanner window when inserted into a carrier. The carrier can be rotated at the identification position by the handling and transport system and the code can be read anywhere at the outer tube surface. Additional code types like 2D or other features can easily be oriented to the field of view of a vision system to support additional feature reading.
- Cleaning of the user interfaces for loading and unloading is easy as rack guiding features are no longer present and in the way. Travel surfaces and areas for the carriers are plane and flush. Contamination and carry-over risk is reduced by better and easier cleaning.

The foregoing description of the preferred embodiment of the invention has been presented for purposes of illustration and description. It is not intended to be exhaustive or to limit the invention to the precise form disclosed, and modifications and variations are possible in light of the above teachings or may be acquired from practice of the invention. The embodiment was chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein.

### Reference Numerals

- 5: carrier
- 6: sample tube
- 10: tray
- 15: handling system
- 16: magnet
- 20: carrier plate
- 25: camera system
- 30: centering member for carrier
- 35: centering member for sample tube

## Claims

1. A handling system for actuating at least one single sample carrier, comprising
a. a carrier plate for placing the at least one single sample carrier onto it; and
b. at least one movable U-shaped magnet arranged below the carrier plate for coupling the at least one single sample carrier with a ferromagnetic core; and
c. a drive for moving the at least one movable U-shaped magnet
i. in a z-axis towards or from the lower side of the carrier plate for coupling of the at least one single sample carrier; and
ii. in x and y axis together with a coupled at least one single sample carrier for moving the at least one single sample carrier onto the carrier plate; and
d. subunits for loading, unloading, parking or storing the at least one single sample carrier.

2. The handling system of claim 1, wherein the U-shaped magnet is arranged with its opening towards the carrier plate.

3. The handling system of claim 1 or 2, further comprising a tray for arranging at least two single sample carriers onto it.

4. The handling system of any one of claims 1 to 3, further comprising a barcode scanner or camera system to identify the at least one single sample carrier and/or a sample tube placed into such a carrier.

5. A handling system of any one of claims 1 to 4, comprising a sensor for detecting coupling of the at least one single sample carrier by detecting changes of magnetic fields.

6. A handling system of any one of claims 1 to 5, comprising a centering member for the at least one single sample carrier and/or the sample tube placed into such a carrier, wherein a first centering member 30 is adapted to enclose a sample carrier leaving one side open so that the sample carrier can move inside the first centering member 30 and/ or a second centering member 35 adapted to encloses the upper part of the sample tube 6 for its fixation.

7. A method for actuating at least one single sample tube carrier for a single sample in an automated analyzer system, comprising the steps of:
a. Providing the at least one single sample carrier comprising an internal ferromagnetic core onto a carrier plate;
b. Providing a handling system with at least one movable U-shaped magnet below the carrier plate;
c. Providing a drive for moving the at least one movable U-shaped magnet below the carrier plate in x, y and z-axis;
d. Coupling the at least one movable U-shaped magnet below the carrier plate to the ferromagnetic core of the at least one single sample tube carrier by moving said at least one movable U-shaped magnet below the carrier plate in z-axis towards the lower side of the carrier plate; and
e. Actuating the sample carrier by moving the at least one movable U-shaped magnet below the carrier plate in x- and/or y-axis together with the coupled at least one single sample carrier.

8. The method of claim 7, wherein the at least one single sample carrier is scanned or optically captured prior to providing it.

9. The method of claim 7 or 8, comprising arranging the at least one sample carrier onto the carrier plate in subunits for loading, unloading, parking or storing.

10. The method of any one of claims 7 to 9, comprising the step of detecting coupling of the at least one sample carrier using a sensor for detecting changes in magnetic fields.

11. The method of any one of claims 7 to 10, comprising a first centering member for enclosing the at least one sample carrier and/or a second centering member for fixation of the upper part of the sample tube in intended positions for processing the sample.

12. The method of any one of claims 7 to 11, comprising aspirating the sample from the sample tube after reaching a processing position.
